# EUROPEAN PATENT SPECIFICATION

(11) **EP 0 368 235 B1**
(45) Date of publication and mention of the grant of the patent: **26.04.1995**
(21) Application number: 89120585.8
(22) Date of filing: 07.11.1989
(51) Int. Cl.: B29C 63/18, H02G 1/00, H02G 1/14

(54) **Device for applying sleeves to joint electric cables**
Vorrichtung zum Anbringen von Hüllen auf elektrische Kabelverbindungen
Dispositif de mise en place de manchons sur des connexions de câbles électriques

(30) Priority: 10.11.1988 IT 2257888
(43) Date of publication of application: 16.05.1990
(73) Proprietor: PIRELLI CAVI S.p.A., 20126 Milano (IT)
(72) Inventor: Vallauri, Ubaldo, Monza (Milan) (IT); Portas, Francesco, Quattordio (Alessandria) (IT)
(74) Representative: Giannesi, Pier Giovanni

(56) References cited:
- EP-A- 0 149 032
- AT-B- 332 479
- BE-A- 543 102
- DE-A- 3 001 158
- GB-A- 1 128 074
- PATENT ABSTRACTS OF JAPAN vol. 3, no. 71 (E-118) June 20, 1979& JP-A-54 49 588 (FURUKAWA DENKI KOGYO K.K. ) April 18, 1979

## Description

The present invention relates to a device for applying sleeves to joint electric cables, of the type comprising: a cylindrical tubular support around which a sleeve of elastomeric material is fitted in conditions of elastic expansion, said tubular support being provided with an inner cavity having a diameter greater than the outer diameter of the cables to be jointed and removing means acting on the sleeve and on the tubular support to remove this latter from the sleeve itself after said support and said sleeve have been positioned at the jointing zone of the cables.

As known, when two electric cables are jointed together at their respective ends, it is necessary to apply, in the jointing zone, a sleeve which has the double function of realizing an adequate electrical insulation in said zones and of protecting the jointing from the various outer agents, as moisture, dust and so on.

A type of sleeve widely used in the field is substantially made of elastomeric material, with such dimensions that when applied on the jointing, the sleeve itself exerts a sufficient pressure in radial sense on the outer surfaces of the insulations of the cables. This condition is necessary in order to assure the lack of air bubbles at the interface between the sleeve and the surface of the insulations of the cables, whose presence would seriously impair the working of the sleeve.

During their manufacturing the sleeves are previously fitted, in conditions of elastic expansion, around appropriate cylindrical tubular supports of rigid material,as for instance polymeric materials, to be easily applied on the jointings of the cables. During the use, the tubular support which has an inner diameter greater than the diameter of the cables, is fitted around one of the cables before being jointed. Following the mutual connection of the conductors of the cables, the tubular support together with the sleeve fitted therearound, is symmetrically arranged on the jointing zone to be then removed from the sleeve. Therefore the sleeve shrinks elastically matching perfectly the surfaces of the insulations of the cables in the jointing zone.

The release of the tubular support from the sleeve is effected through removing means that, at the present state of the technique, are essentially constituted by a plurality of annular flanges consecutively connected by threaded bars engaging during working through the flanges themselves upon interposition of respective bushings. The flanges are coaxially aligned along a portion of the tubular support that projects outside the sleeve. More in detail, one of said flanges abuts on an outer shoulder provided outside the sleeve, while another flange acts on an annular projection obtained on one end of the tubular support. In this way, acting on the bushings that connect each flange to the threaded bars, the flanges move away from each other and consequently the tubular support is removed from the protection sleeve.

One of the more relevant drawbacks of the known technique consists in the risk of causing tearings or cuts on the outer surfaces of the insulations of the cables during the removal of the tubular support from the sleeve. In fact, the insulations of the cables have not a high mechanical rigidity and are subject to the risk of bending, for instance under the effect of their own weight, during the jointing operation and the application of the sleeve. Therefore, it may easily happen that when the tubular support is removed from the sleeve as previously described, the corners of the ends of the support slide with force on the outer surfaces of the insulations of the cables damaging thus the same.

Other drawbacks arise when, after the application of the sleeve, the tubular support has to be cut longitudinally in order to remove it from the cables. The operations for cutting the support are in fact quite difficult, especially when the cables are placed in narrow spaces, and consequently it may happen that the cables are inadvertently damaged with the used cutting tools.

Also the flanges provided in the removing means must be cut so as to be removed from the cables. This need gives rise to complications that are to be added to those previously described and, moreover, produces an economic loss since the flanges, after the cutting operation cannot obviously be utilized again.

The main aim of the present invention is substantially that of overcoming the drawbacks of the known tecnique by realizing a device able to eliminate any possible risk by the ends of the tubular support of interfering with and damaging the outer surface of the insulations of the cables with the removal of the support itself from the sleeve during the joint execution and that make simple and without risks of damaging the outer surface of the cables the operations for obtaining the release of the removing means and of the tubular support from the cables after the joint execution.

This aims and other ones, that better will appear in the present desription are substantially achieved by means of a device for applying sleeves to joints of electric cables comprising:
- a cylindrical tubular support around which a sleeve of elastomeric material is fitted in conditions of elastic expansion, said tubular support being provided with an inner cavity having a diameter greater than the outer diameter of the cables to be joined,
- removing means acting on the sleeve and on the tubular support to remove this latter from the sleeve after said support and sleeve have been positioned in the jointing zone of the cables, said removing means being formed by a first mobile element arranged for abutting on a shoulder of the sleeve, a second mobile element and a driving unit acting on said mobile elements to move the one away from the other so as to remove the tubular support from the sleeve, characterized by the fact that said second mobile element comprises:
- at least two connecting pins circumferentially distibuted around the axis of the tubular support and arranged for releasably engaging in corresponding through holes obtained in proximity of one end of said support, said connecting pins being arranged to abut on the outer surface of the insulation of one of said cables to dispose it distanced from and substantially in coaxial position to the tubular support and
- in that at least a pre-breaking notch, which extends longitudinally along the entire cylindrical tubular support, is provided on the surface of the inner cavity of this latter.

Further characteristics and advantages will be better explained by the detailed description of a preferred, but not exclusive, embodiment of a device for applying sleeves to joint electric cables, according to the present invention. Said description will be made herebelow with reference to the attached sheets of drawing, supplied only by way of non-limiting example, in which:
- FIGURE 1: - is a lateral and partial section of the device according to the invention in a step wherein the tubular support is being removed from the sleeve to apply this latter on the jointing zone of two electric cables;
- FIGURE 2: - is a section made along line II-II of figure 1;
- FIGURE 3: - is a section made along line III-III of figure 1.

With reference to the cited figures, reference numeral 1 indicates the whole device for applying sleeves to joint electric cables according to the present invention.

The device 1 comprises a rigid cylindrical tubular support 2, for instance made of polymeric material, around which a conventional sleeve 3 of elastomeric material has been fitted in conditions of elastic expansion in radial sense. The forced application of the sleeve 3 on the tubular support 2 is made in a known and conventional manner during its manufacturing and consequently is not described.

As shown by the attached sheets of drawing, at least two through holes 4 are originally obtained at a first end 2a of the tubular support 2, the function of said holes will be cleared up hereinafter. The shown example foresees the presence of three through holes 4, distributed at 120° around the axis of the support 2.

Always according to the present invention, at least a pre-breaking notch 5 is obtained inside the tubular support, said notch extending from the first end 2a to a second end 2b of the tubular support 2. The illustrated example foresees the presence of two pre-breaking notches 5 arranged in diametrally opposite positions, extending longitudinally inside the support 2 and having a wedge-shaped section.

Moreover the device 1 comprises removing means 6 arranged for acting on the sleeve 3 and on the tubular support 2 to remove this latter from the sleeve when the sleeve itself must be applied on two cables 7a, 7b consecutively connected at a jointing 8.

Initially, the removing means 6 comprise a first mobile element 9 arranged for abutting on a shoulder 3a of the sleeve 3, a second mobile element 10 arranged for engaging releasably the tubular support 2 and a driving unit 11 acting on the mobile elements 9 and 10 to move the one away from the other so as to remove the tubular support 2 from the sleeve 3.

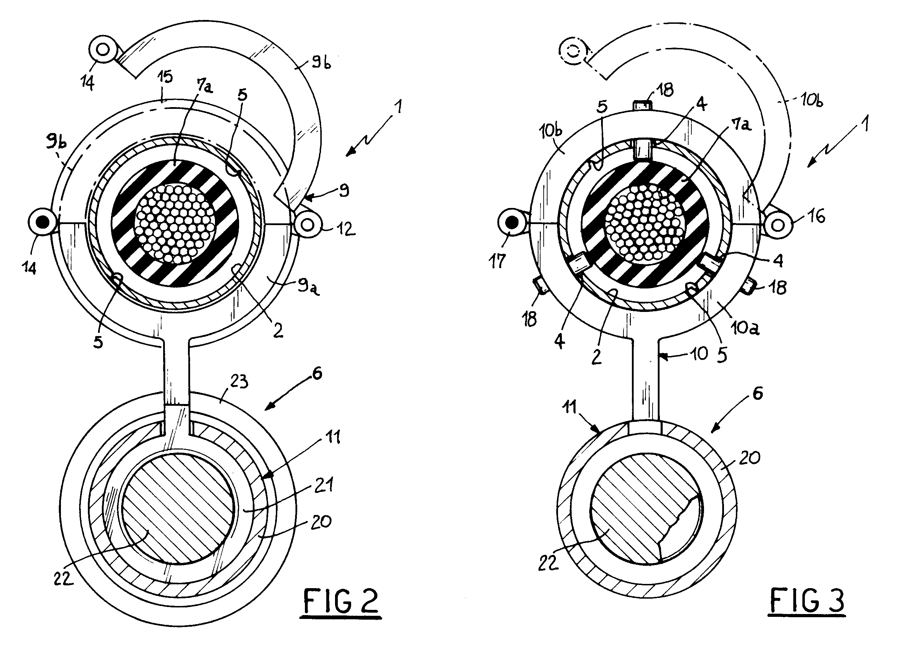

Preferably, as shown in figure 2, the first mobile element 9 comprises essentially a fixed portion 9a of a semicircular configuration connected to the driving unit 11 at one end of which a mobile portion 9b having a semicircular configuration too, complementary to the fixed portion 9a is pivoted through a first hinge 12. The mobile portion 9b is able to translate around its pivoting point from an opening position wherein it is separated from the fixed portion 9a to a closing position wherein one of its ends, opposite to the hinge 12, engages with the end of the fixed portion 9a so as to define with this latter a closed circular configuration. In closing position, the mobile portion 9b is rigidly secured to the fixed portion through a bolt closing element 14 acting on the part opposite to the hinge 12.

Moreover it is preferred that the contact of the first mobile element 9 onto the sleeve 3 takes place upon interposition of an annular intermediate element 15 made of semi-rigid material and arranged coaxially on the tubular support 2.

Likewise to what said with reference to the first mobile element 9, the second mobile element 10 comprises preferably, as shown in figure 3, a fixed portion 10a connected to the driving unit 11 and a mobile portion 10b pivoted to the fixed portion 10a through a second hinge 16. As clearly shown in figure 3, the mobile portion 10b able to translate from an opening position wherein it is separated from the fixed portion 10a to a closing position wherein one of its ends, opposite to the hinge 16 engages with a corresponding end of the fixed portion 10a so as to form, with this latter, a substantially circular configuration wherein the tubular support 2 is coaxially enclosed. Also in this case, in closing condition the mobile portion 10b is rigidly secured to the fixed portion 10a through a second bolt fastening element 17.

The engagement of the tubular support 2 by the second mobile element 10 occurs by the action of at least two connecting pins 18 borne by the mobile element itself, homogeneously distributed around the axis of the tubular support 2 and arranged so as to engage in the said through holes 4. The shown example foresees the presence of three connecting pins 18, disposed at 120° around the axis of the tubular support 2.

As it is easily visible from figure 3, each one of the connecting pins 18 projects inside the tubular support so as to abut on the outer surface of one of the cables 7a, 7b in the specific case of the first cable 7a. In this way, the cable is maintained in coaxial position inside the tubular support at least in the zones near the first end 2a of the tubular support 2. It is preferred that the connecting pins 18 are made or covered with an antiabrasive material. Alternatively, it is possible to apply sliding blocks of antiabrasive material on the ends of the connecting pins 18, or sliding rollers or the like.

Since the diametral dimensions of the cables 7a, 7b may vary, within certain limits, depending on the needs, each one of the connecting pins 18 can be positioned in radial sense with respect to the axis of the tubular support 2. To this end, the shown example foresees that each connecting pin 18 is slidably engaged in a hole 18a obtained on the second mobile element 10 and can be fastened in a wished position by means of a threaded dowel 19 engaging through the mobile element. Obviously, said solution is given only by way of example since different systems for adjusting the position of the connecting pins 18 can be adopted.

In alternative, the connecting pins 18 form a single body with the second mobile element 10 and in this case the tubular support 2 is provided with a plurality of holes 4 aligned along the generatrices of the tubular body itself.

In this way, depending on the mutual relative dimensions between the outer diametral dimensions of the cables and the inner diametral dimensions of the tubular support 2 it is possible to choose in which holes 4 the pins 18 are to be inserted in order to avoid the risk that the end 2a of the support 2 can slide on the outer surface of the cable insulation.

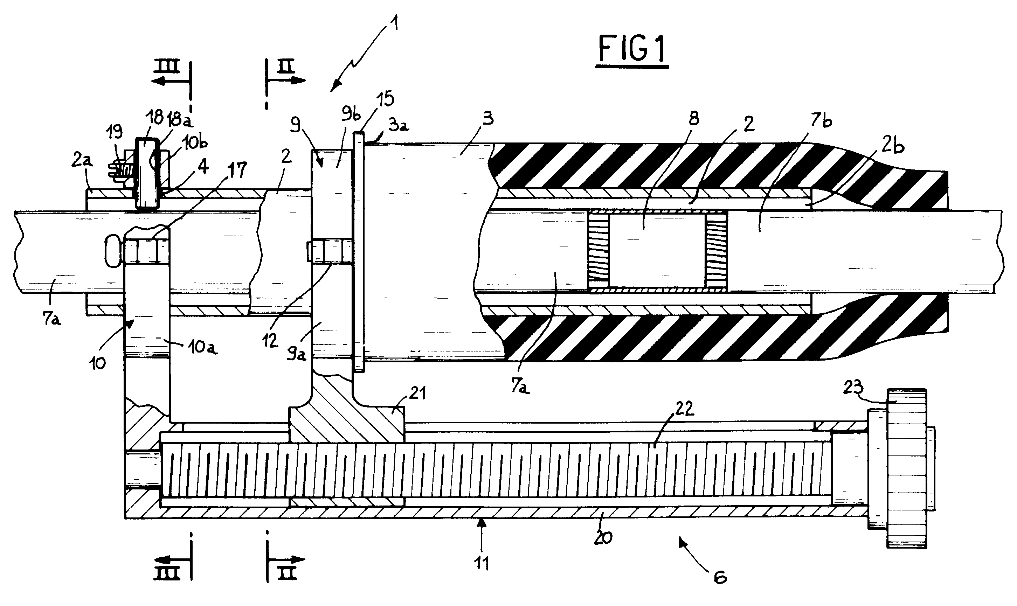

As clearly visible in figure 1, the driving unit 11 comprises a supporting tubular element 20 at one end of which the second mobile element 10 is secured. A small block 21 is engaged in a sliding manner inside the supporting element 20. Said small block 21 is rigidly connected to the first mobile element 9 and during working is engaged along a threaded rod 22 rotatably connected to the supporting element and set in action through a driving hand grip 23 arranged outside this latter.

Following what described, the working of the device forming the object of the present invention results to be very easy.

The tubular support 2, whose inner cavity has a diameter greater than the diameter of the cables 7a, 7b, is suitable for being inserted, together with the sleeve 3 fitted therearound, along one of the cables themselves before being connected. Following the connection 8 carried out in a way known per se and therefore not described, the tubular support 2 - sleeve 3 assembly is translated along the cables 7a, 7b so as to be arranged in a substantially symmetric way with respect to the connection itself.

At this point it is necessary to use the removing means 6 to remove the tubular support 2 from the sleeve 3 so as this latter, shrinking elastically, matches uniformly the surfaces of the insulations of the cables 7a and 7b in proximity of the connection 8. To this end, the fixed portions 9a, 10a of the mobile elements 9 and 10 are laid on the tubular support 2 at the zones near its first end 2a, maintaining the mobile portions 9b, 10b in opening position. In this situation the connecting pins 18 borne by the mobile portion 10b of the second mobile element 10 are engaged in the corresponding holes 4 arranged on the tubular support 2. Consequently, the mobile portions 9b, 10b are placed in closing position so that both the mobile elements 9, 10 surround completely the tubular support 2. By this operation the connecting pin 18 borne by the mobile portion 10b engages with the corresponding through hole 4.

In this situation the connecting pins 18 after possible adjustments in connection with their radial positioning, act on the cable 7a so that this latter, at least in proximity of the end 2a of the tubular support 2, is positioned in the middle with respect to the tubular support itself.

Consequently, the hand grip 23 is set in action manually so that by rotating the threaded rod 22 the mobile elements 9, 10 move away from each other.

Following this, the tubular support 2, connected to the second mobile element 10,is removed from the sleeve 3, on which the first mobile element 9 acts in abutting relationship, upon the possible interposition of the intermediate element 15.

As soon as a short length of the sleeve 3 projects from the second end 2b of the tubular support 2, said sleeve length will begin to elastically shrinking getting thus in touch with the insulation surface of the cable 7b. The arrangement of the sleeve 3 with respect to the connection 8 will remain fixed during the whole operation for the removal of the tubular support 2 that will take place by moving only the support itself.

When said removing operation has been completed, the mobile elements 9, 10 are released from the tubular support 2 and consequently from the cables 7a, 7b by opening the mobile portions 9b, 10b.

Advantageously, thanks to the presence of the pre-breaking notches 5 the tubular support 2 can be easily cut for being removed from the cables 7a, 7b without any risk of damaging the cables themselves.

The present invention achieves thus the aimed purposes.

In fact, the device forming the object of the present invention is able to avoid any possible risk by the tubular support end of interfering on the surface of the insulations of the cables during the removal of the support itself from the sleeve. In this way any possible risk of damaging the insulations of the cables is eliminated.

Moreover, the device forming the object of the present invention makes simple the operations for obtaining the release of the tubular support from the cables when the application of the sleeve has been completed.

Moreover, it is to be stressed that it is not necessary to carry out any cutting operation or the like to release the removing means from the cables. This, besides representing a considerable saving of time and a further reduction in the risks of damaging the cables, is economically advantageous since, unlike what may be found in the known tecnique, the removing means can be used again as they are to carry out other operations for applying the sleeves.

## Claims

1. Device (1) for applying sleeves (3) to joints of electric cables comprising:
- a cylindrical tubular support (2) around which a sleeve (3) of elastomeric material is fitted in conditions of elastic expansion, said tubular support (2) being provided with an inner cavity having a diameter greater than the outer diameter of the cables to be joined,
- removing means (6) acting on the sleeve (3) and on the tubular support (2) to remove this latter from the sleeve after said support (2) and sleeve (3) have been positioned in the jointing zone of the cables (7a, 7b), said removing means being formed by a first mobile element (9) arranged for abutting on a shoulder (3a) of the sleeve (3), a second mobile element (10) and a driving unit (11) acting on said mobile elements (9, 10) to move the one away from the other so as to remove the tubular support (2) from the sleeve (3),
characterized by the fact that said second mobile element (10) comprises:
- at least two connecting pins (18) circumferentially distibuted around the axis of the tubular support (2) and arranged for releasably engaging in corresponding through holes (4) obtained in proximity of one end of said support, said connecting pins (18) being arranged to abut on the outer surface of the insulation of one of said cables (7a) to dispose it distanced from and substantially in coaxial position to the tubular support (2) and
- in that at least a pre-breaking notch (5), which extends longitudinally along the entire cylindrical tubular support, is provided on the surface of the inner cavity of this latter.

2. Device according to claim 1, characterized by the fact that said second mobile element (10) comprises a fixed portion (10a) of substantially semicircular configuration connected to the driving unit (11) and a mobile portion (10b) having a semicircular configuration and pivoted to the fixed portion (10a) and able to translate from a closing condition wherein it is engaged to the fixed portion to form a closed circular configuration to engage the tubular support (2) at said through holes (4), to an opening condition wherein it is separated from the fixed portion.

3. Device according to claim 1, characterized by the fact that said first mobile element (9) comprises a fixed portion (9a) of substantially semicircular configuration, connected to the driving unit (11) and a mobile portion (9b) having a semicircular configuration, pivoted to the fixed portion (9a) and able to translate from a closing condition, wherein it is engaged to the fixed portion to form a closed circular configuration, to an opening condition wherein it is separated from the fixed portion (9a).

4. Device according to claim 1, characterized by the fact that each one of said connecting pins (18) can be positioned in radial sense with respect to the axis of the tubular support (2).

5. Device according to claim 1, characterized by the fact that each connecting pins (18) is engaged in a sliding manner to the second mobile element (10) according to a direction substantially radial with respect to the axis of the tubular support (2) and can be fastened in a desired position through at least a threaded dowel (19) engaged during working with the second mobile element (10).

6. Device according to claim 1, characterized by the fact that said first mobile element (9) acts on the sleeve upon interposition of an annular intermediate element (15) of semi-rigid material around the tubular support (2).

7. Device according to claim 1, characterized by the fact that said driving unit (11) comprises a tubular support (20) integral with the second mobile element (10) and engaging in a sliding manner a small block (21) rigidly connected to the first mobile element (9) and engaging during working with a threaded rod (22) rotatably encased in the tubular support (20) itself and rotated by means of a driving hand grip (23).

8. Device according to claim 1, characterized by the fact that said tubular support (2) is provided with two pre-breaking notches (5) disposed in diametrally opposite positions inside the tubular support itself.

9. Device according to claim 1, characterized by the fact that said pre-breaking notch (5) has wedge-shaped section.

## Patentansprüche

1. Vorrichtung (1) zum Aufbringen von Hülsen (3) auf Verbindungen elektrischer Kabel mit
- einer zylindrischen rohrförmigen Abstützung (2), um welche eine Hülse (3) aus elastomerem Material in Zuständen elastischer Aufweitung aufgepaßt ist, wobei die rohrförmige Abstützung (2) einen inneren Hohlraum mit einem Durchmesser aufweist, der größer ist als der Außendurchmesser der zu verbindenden Kabel,
- Entfernungseinrichtungen (6), die auf die Hülse (3) und auf die rohrförmige Abstützung (2) wirken, um letztere aus der Hülse zu entfernen, nachdem die Abstützung (2) und die Hülse (3) in dem Verbindungsbereich der Kabel (7a, 7b) angeordnet worden sind, wobei die Entfernungseinrichtung von einem ersten beweglichen Element (9), das zum Anschlagen an einer Schulter (3a) der Hülse (3) angeordnet ist, einem zweiten beweglichen Element (10) und einer Antriebseinheit (11) gebildet wird, welche auf die beweglichen Elemente (9, 10) wirkt, um das eine von dem anderen zum Entfernen der rohrförmigen Abstützung (2) aus der Hülse (3) weg zu bewegen,
dadurch gekennzeichnet,
- daß das zweite bewegliche Element (10) wenigstens zwei am Umfang um die Achse der rohrförmigen Abstützung (2) verteilte und zum lösbaren Eingreifen in entsprechenden, in der Nähe des einen Endes der Abstützung ausgebildeten Durchgangslöchern (4) angeordnete Verbindungsbolzen (18) aufweist, wobei die Verbindungsbolzen (18) so angeordnet sind, daß sie an die Außenfläche der Isolierung eines der Kabel (7a) anstoßen, um es im Abstand von und in im wesentlichen koaxialer Position zu der rohrförmigen Abstützung (2) anzuorden, und
- daß wenigstens eine Sollbruchkerbe (5), welche sich in Längsrichtung entlang der ganzen zylindrischen rohrförmigen Abstützung erstreckt, auf der Oberfläche des inneren Hohlraums dieser letzteren vorgesehen ist.

2. Vorrichtung nach Anspruch 1, dadurch gekennzeichnet, daß das zweite bewegliche Element (10) einen feststehenden Abschnitt (10a) mit im wesentlichen halbkreisförmiger Gestalt, welcher mit der Antriebseinheit (11) verbunden ist, und einen beweglichen Abschnitt (10b) mit halbkreisförmiger Gestalt aufweist, der schwenkbar an dem feststehenden Abschnitt (10a) angelenkt ist und und von einem Schließzustand, in welchem er an dem feststehenden Abschnitt zur Bildung einer geschlossenen kreisförmigen Gestalt für den Eingriff der rohrförmigen Abstützung (2) an den Durchgangslöchern (4) angreift, in einen Öffnungszustand übergehen kann, in dem er von dem feststehenden Abschnitt getrennt ist.

3. Vorrichtung nach Anspruch 1, dadurch gekennzeichnet, daß das erste bewegliche Element (9) einen feststehenden Abschnitt (9a) mit im wesentlichen halbkreisförmiger Gestalt, welcher mit der Antriebseinheit (11) verbunden ist, und einen beweglichen Abschnitt (9b) mit halbkreisförmiger Gestalt aufweist, der an dem feststehenden Abschnitt (9a) schwenkbar angelenkt ist und von einem Schließzustand, in dem er zur Bildung einer geschlossenen kreisförmigen Gestalt an dem feststehenden Abschnitt angreift, in einen Öffnungszustand übergehen kann, in welchem er von dem feststehenden Abschnitt (9a) getrennt ist.

4. Vorrichtung nach Anspruch 1, dadurch gekennzeichnet, daß jeder der Verbindungsbolzen (18) in Radialrichtung bezüglich der Achse der rohrförmigen Abstützung (2) positioniert werden kann.

5. Vorrichtung nach Anspruch 1, dadurch gekennzeichnet,daß jeder Verbindungsbolzen (18) gemäß einer Richtung im wesentlichen radial bezüglich der Achse der rohrförmigen Abstützung (2) gleitend verschiebbar mit dem zweiten beweglichen Element (10) in Eingriff steht und durch wenigstens einen Gewindedübel (19), der während des Vorgangs mit dem zweiten beweglichen Element (10) in Eingriff steht, in einer gewünschten Stellung befestigt werden kann.

6. Vorrichtung nach Anspruch 1, dadurch gekennzeichnet, daß das erste bewegliche Element (9) nach Einfügung eines ringförmigen Zwischenelements (15) aus halbstarrem Material um die rohrförmige Abstützung (2) auf die Hülse wirkt.

7. Vorrichtung nach Anspruch 1, dadurch gekennzeichnet, daß die Antriebseinheit (11) eine rohrförmige Abstützung (20) aufweist, welche in einem Stück mit dem zweiten beweglichen Element (10) ausgeführt ist und gleitend verschiebbar mit einem kleinen Block (21) in Eingriff steht, der starr mit dem ersten beweglichen Element (9) verbunden ist, und während des Vorgangs an einer Gewindestange (22) angreift, die drehbar in der rohrförmigen Abstützung (20) selbst eingeschlossen ist und mit Hilfe eines Antriebshandgriffes (23) in Drehung versetzt wird.

8. Vorrichtung nach Anspruch 1, dadurch gekennzeichnet, daß die rohrförmige Abstützung (2) zwei Sollbruchkerben (5) aufweist, welche an diametral gegenüberliegenden Stellen in der rohrförmigen Abstützung selbst angeordnet sind.

9. Vorrichtung nach Anspruch 1, dadurch gekennzeichnet, daß die Sollbruchkerbe (5) einen keilförmigen Querschnitt aufweist.

## Revendications

1. Dispositif (1) pour mettre en place des manchons (3) sur des connexions de câbles électriques, qui comprend :
- un support (2), tubulaire et cylindrique, autour duquel un manchon (3) en matériau élastomère est emboîté en situation de dilatation élastique, ledit support tubulaire (2) étant pourvu d'une cavité interne dont le diamètre est supérieur au diamètre extérieur des câbles à réunir,
- un moyen de retrait (6) agissant sur le manchon (3) et sur le support tubulaire (2) pour retirer ce dernier du manchon après que ledit manchon (3) et ledit support (2) ont été mis en place dans la zone de connexion des câbles (7a, 7b), ledit moyen de retrait étant formé d'un premier élément mobile (9) disposé pour venir buter contre un épaulement (3a) du manchon (3), d'un second élément mobile (10) et d'une unité d'entraînement (11) qui agit sur lesdits éléments mobiles (9, 10) afin de les éloigner l'un de l'autre de manière à retirer le support tubulaire (2) du manchon (3),
caractérisé par le fait que ledit second élément mobile (10) comprend :
- au moins deux broches de liaison (18) réparties à la circonférence autour de l'axe du support tubulaire (2) et disposées pour s'engager de manière libérable dans des trous traversants correspondants (4) formés à proximité d'une extrémité dudit support, lesdites broches de liaison (18) étant disposées pour buter contre la surface extérieure de l'isolation de l'un desdits câbles (7a) aiin de le placer à une certaine distance du support tubulaire (2) de manière sensiblement coaxiale, et
- au moins une entaille (5) d'amorce de rupture qui s'étend dans le sens longitudinal sur tout le support tubulaire cylindrique et qui est réalisée sur la surface de la cavité intérieure de ce dernier.

2. Dispositif selon la revendication 1, caractérisé par le fait que ledit second élément mobile (10) comprend une partie fixe (10a) de configuration sensiblement semi-circulaire, accouplée à l'unité d'entraînement (11), et une partie mobile (10b) de configuration semi-circulaire, articulée à la partie fixe (10a) et capable de se translater depuis un état fermé dans lequel elle est en prise avec la partie fixe pour former une configuration circulaire fermée qui maintient le support tubulaire (2) au niveau desdits trous traversants (4), vers un état ouvert dans lequel elle est séparée de la partie fixe.

3. Dispositif selon la revendication 1, caractérisé par le fait que ledit premier élément mobile (9) comprend une partie fixe (9a) de configuration sensiblement semi-circulaire, accouplée à l'unité d'entraînement (11), et une partie mobile (9b) de configuration semi-circulaire, articulée à la partie fixe (9a) et capable de se translater depuis un état fermé, dans lequel elle est en prise avec la partie fixe pour former une configuration circulaire fermée, vers un état ouvert dans lequel elle est séparée de la partie fixe (9a).

4. Dispositif selon la revendication 1, caractérisé par le fait que chacune desdites broches de liaison (18) peut être placée en sens radial par rapport à l'axe du support tubulaire (2).

5. Dispositif selon la revendication 1, caractérisé par le fait que chacune desdites broches de liaison (18) s'engage de manière coulissante dans ledit second élément mobile (10), suivant une direction sensiblement radiale par rapport à l'axe du support tubulaire (2), et peut être fixée dans une position voulue par l'intermédiaire d'au moins une cheville filetée (19) en prise pendant le travail avec le second élément mobile (10).

6. Dispositif selon la revendication 1, caractérisé par le fait que ledit premier élément mobile (9) agit sur le manchon lors de l'interposition autour du support tubulaire (2) d'un élément annulaire intermédiaire (15) fait d'un matériau semi-rigide.

7. Dispositif selon la revendication 1, caractérisé par le fait que ladite unité d'entraînement (11) comprend un support tubulaire (20) qui fait corps avec ledit second élément mobile (10), qui se met en prise de manière coulissante avec un petit bloc (21) couplé de manière fixe audit premier élément mobile (9) et qui se met en prise pendant le travail avec une tige filetée (22) enfermée de manière à pouvoir tourner dans le support tubulaire (20) lui-même et mise en rotation par une manette manuelle d'entraînement (23).

8. Dispositif selon la revendication 1, caractérisé par le fait que ledit support tubulaire (2) est muni de deux entaille (5) d'amorce de rupture, placées en des positions diamétralement opposées à l'intérieur du support tubulaire lui-même.

9. Dispositif selon la revendication 1, caractérisé par le fait que ladite entaille (5) d'amorce de rupture a une section en forme de coin.
